# EUROPEAN PATENT APPLICATION

(11) **EP 3 154 012 A1**
(43) Date of publication of application: **12.04.2017**
(21) Application number: 15188396.4
(22) Date of filing: 05.10.2015
(51) Int. Cl.: G06Q 20/38, G06Q 20/04

(54) **PROCESS AND DEVICE FOR VOUCHER CERTIFICATION**

(71) Applicant: TECHEXPERTS S.r.L., 10128 Torino (IT)
(72) Inventor: CASTAGNO, Giancarlo, 10126 TORINO (IT)
(74) Representative: Lunati & Mazzoni S.r.L.

(57) **Abstract**

A voucher certification device envisages the use of an identification code; the certification device comprises a voucher database that associates each identification code with a usability code; and a certifier comprising an identification code reader and suitable to be data linked to the voucher database in order to send the identification code read by the reader to the voucher database and receive the usability code associated with said identification code from the voucher database.

## Description

The present invention relates to a process and device for voucher certification of the type as recited in the preamble of claim 1.

In particular, the process and the device make it possible to verify the authenticity of luncheon vouchers, prepaid cards, vouchers or other similar documents or coupons, hereinafter referred to in general as vouchers, issued by travel agencies, shops, employers, etc., giving the user the right to a discount, a reduction in expenditure or other benefit associated with the document.

One of the best known examples of vouchers currently in use are so-called "luncheon vouchers".

Luncheon vouchers are a means of payment that have a fixed value, used to purchase a meal, foodstuffs or other convenience goods.

They are issued by specific issuing companies and used by private and public sector employees, who receive the luncheon vouchers and use them to purchase products at commercial establishments (such as cafés, restaurants and supermarkets) that have an arrangement with the issuing company.

Other commonly used vouchers are those issued by travel agencies.

These vouchers have a specific economic value and can be spent at hotels or wellness centres selected by the travel agency, to receive services for the amount associated with the voucher.

The prior art described above has several significant drawbacks.

A first important drawback lies in the fact that, owing to the great variety of vouchers and possible values that can be associated therewith, these can easily be forged in order to receive services or discounts to which one is not entitled. This drawback is of particular importance for commercial establishments which, having delivered a service or sold a product in exchange for a forged voucher, do not receive the amount due for said service or product.

Another drawback therefore lies in the fact that, owing to the ease with which vouchers can be forged, many commercial establishments do not accept them.

A further drawback is that few commercial establishments accept vouchers and, as a consequence, holders of vouchers have difficulty finding shops that will accept them.

In this situation the technical purpose of the present invention is to develop a voucher certification process and device able to substantially overcome the drawbacks mentioned above.

Within the sphere of said technical purpose one important aim of the invention is to develop a process and a device whereby the authenticity and value of a voucher can be verified easily and quickly.

Another important aim of the invention is to provide a process and a device which, by establishing the authenticity of vouchers, make it possible for more shops to accept such vouchers and thus make them easier and more practical to use.

The technical purpose and specified aims are achieved with a voucher certification process and device as claimed in the appended independent claims.

Preferred embodiments are described in the dependent claims.

In this document, measurements, values, forms and geometric data (such as perpendicularity and parallelism), when used with terms such as "about" or other similar terms such as "practically" or "substantially", are to be considered without any measurement errors or inaccuracies due to production and/or manufacturing errors and, above all, without any slight divergence from the value, measurement, form or geometric data with which they are associated. For example, such terms, when associated with a value, preferably indicate a difference of not more than 10% of said value.

Moreover, terms such as "first", "second", "upper", "lower", "main" and "secondary" do not necessarily indicate an order, priority or respective position, but may simply be used in order to make a clear distinction between the different components. Unless otherwise specified, as is apparent from the description that follows, specific descriptions that use terms such as "processing", "computing", "calculation", "determination" or similar terms refer to the actions and/or processes of a computer or of a calculation system, or similar electronic calculation device, which processes and/or converts physical data, such as for example the electronic quantities of computer system logs and/or memories, into other data also expressed as physical quantities in computer systems, logs or other data storage, transmission or display devices.

The certification process according to the invention is suitable for use to certify the authenticity of vouchers such as, for instance, luncheon vouchers and prepaid cards.

Such vouchers, which are known in the prior art, comprise a medium, usually paper, and at least one graphic element on the medium and comprising information relating to the voucher. In particular, said graphic element comprises an identification code suitable to uniquely identify the voucher and a discount, that is to say, the value of the voucher and, thus, the amount and/or discount that the commercial establishment must apply and/or deduct from the cost against presentation of the voucher.

The medium and, thus, the graphic element are appropriately substantially flat.

The medium thus defines a positioning plane.

In addition to the identification code, the at least one graphic element may comprise a number of uses indicating the number of times the voucher can be used. For example, in the case of vouchers contained in a booklet of money-off coupons, the number of uses corresponds to the number of coupons in the booklet.

Optionally, the at least one graphic element may comprise an expiry date by which the voucher must be used.

Note that the identification code, amount and/or discount and, if present, number of uses and/or expiry date may be included within a single graphic element or in several graphic elements. Preferably, they are included within a single graphic element.

The graphic element comprises print or a magnetic strip bearing the aforesaid information. Preferably it comprises print appropriately chosen from among an alphanumeric code, a 1 D or 2D (QR) barcode or a hologram. Preferably, the graphic element comprises a hologram.

The certification process comprises and, in particular, is suitable to be performed by means of at least one certification device comprising a voucher database, at least one voucher certifier suitable to be data linked to the voucher database.

The certification process comprises and, in particular, is suitable to be performed also by means of a vouchers taken database suitable to be data linked to the certifier.

The certifier comprises an identification code reader, a control board to control the functioning of the certifier; a data storage memory; a power supply unit suitable to supply power to the certifier (for example, a battery and/or a power supply cable); and, in detail, an interface suitable to allow the user to control the certifier.

The certifier further comprises a program, appropriately stored in the memory, for extracting the individual data items contained in the one or more graphic elements. This program is suitable to recognize the information contained in the graphic element, i.e., the identification code, the discount associated therewith; and, if present, the number of uses and/or expiry date.

The program may be an optical character recognition (OCR) program or a hologram reader program.

The reader is suitable to read the graphic element, appropriately thanks to said data extraction program, and thus to read the identification code, the discount and, if present, the voucher expiry date.

The reader may be an optical scanner and comprise a camera. In particular, in the case of a graphic element in the form of a hologram, it may comprise a hologram reading apparatus. An example of a hologram reading apparatus is described in US-B-7 952 776 from column 1 line 48 to column 6 line 37 and in Figs. 1-5. This part of the description and the aforesaid drawings of US-B-7 952 776 are included by way of reference.

In addition to the aforesaid elements, the certifier may comprise a screen for displaying the graphic element on the voucher.

It may further comprise a timer for measuring the passage of time so that the certifier is able to recognize the time and, above all, the date.

The certifier may also comprise a marker, such as a printer, suitable to print or make some other graphic mark on the voucher to indicate that it has been used. Furthermore, the certifier may comprise a movement device suitable to define a relative motion between the voucher and the reader.

In detail, the movement device is suitable to move the voucher in relation to the reader and, in particular, to the marker along an axis of translation preferably practically parallel to the positioning plane of the medium.

More in detail, the movement device consists of an automatic feeder suitable to allow a plurality of vouchers to be arranged on the certifier and to move them one by one along the axis of translation.

Appropriately, the reader and the marker are substantially aligned along the axis of translation so that the movement device moves the vouchers, presenting the graphic element to the reader and then to the marker.

The certifier may comprise an ID, stored in the memory, suitable to uniquely identify said certifier.

The certifier is data linked to the voucher database which, for example, may be stored in said memory.

Alternatively, the voucher database may reside on a server and the certifier may thus comprise a connector suitable to establish a data link between the server and the certifier.

The connectors are suitable to establish a wireless data link, such as, for example, WI-FI or Bluetooth^{®}. Preferably, the connection means are suitable to enable the exchange of data between the database and the reader via a mobile network, such as 2G, 3G or 4G, for example.

The server comprises at least one hardware structure (a processor or computer) suitable to store and process data; and an additional connector suitable to permit said data link with the certifier.

The voucher database associates a usability code and, preferably, a discount, with each identification code and, thus, with the voucher.

The usability code identifies whether the voucher has already been used and so cannot be used again or whether it is still valid. In particular, this code is zero when the voucher is not valid or at least equal to one and, in particular, to the number of uses if the voucher can still be used.

The voucher database may associate an expiry date with each identification code and, thus, voucher.

Additionally, the voucher database may comprise, associated with each identification code, a personal user identification code so that it is possible to identify the vouchers associated with each user.

The vouchers taken database is similar to the voucher database.

It is designed to gather together the used vouchers and associate these with each identification code and the respective discount.

The vouchers taken database can be stored on the server and/or in the certifier.

In addition to the certifier, the certification device may comprise a personal unit for each user using the vouchers, suitable to be used by the owner and user of the vouchers.

The personal unit is portable, that is to say, of a suitable size to be used and manoeuvred using one hand, and thus practically no bigger than a smart phone or tablet. It may therefore have a length of substantially less than 20 cm, a width of substantially less than 15 cm and a thickness of substantially less than 5 cm.

Preferably, it takes the form of a smart phone or tablet.

The personal unit comprises means for recording the graphic element, means for controlling the personal unit; data storage means; power supply means (preferably a battery); display means; and interface means suitable to enable the user to control the unit.

The display and interface means may coincide and consist of a touch screen.

The recording means are suitable to read the graphic element.

They may be optical recording means and, in particular, comprise a camera suitable to record the graphic element.

In detail, in the case of a graphic element in the form of a hologram, the recording means may comprise a hologram reading apparatus. A hologram reading apparatus is described in US-B-7 952 776 from column 1 line 48 to column 6 line 37 and in Figs. 1-5. This part of the description and the aforesaid drawings of patent US-B-7 952 776 are included here by way of reference.

Preferably, the unit comprises connection means suitable to establish a data link with the voucher database and, thus, between the unit and server and/or between the unit and the certifier.

The connection means may be suitable for establishing a wireless data link, such as WI-FI or Bluetooth^{®}. Preferably, they are suitable for enabling the exchange of data via a mobile network, such as 2G, 3G or 4G, for example.

Furthermore, the personal unit may comprise means for measuring time. Preferably, the personal unit may comprise a data extraction program, substantially the same as that of the certifier, suitable to extract the individual data items in the one or more graphic elements and, appropriately, stored in said storage means.

Additionally, the personal unit may comprise a personal database, stored in the storage means, comprising data about the vouchers associated with the unit and, thus, with the user using the unit.

Said personal database is substantially the same as the voucher database, but limited to the vouchers owned by the user using the unit.

Lastly, the personal unit may comprise a unique personal code associated with the unit, stored in the storage means.

The personal unit may comprise the vouchers taken database, stored in the storage means.

The certification process may comprise, first of all, a step of loading the vouchers to the voucher database, for example, using the personal unit.

In this step, the personal unit, using the recording means, reads the identification codes and, in particular, the graphic elements and, thanks to the data extraction program, extracts the information provided in the graphic elements read. In particular, for each voucher, the unit obtains the identification code, the discount; and preferably, the number of uses and/or the respective expiry date.

Next, the personal unit sends the information extracted from the graphic elements read and, preferably, the personal code of the personal unit, to the voucher database via the data link.

Optionally, the personal unit can store the data extracted from the graphic element in the storage means and create the personal database.

Next, the voucher database stores the voucher identification codes read and, thus, associates the discount, preferably, the personal code of the unit and, possibly, the respective expiry date, with each said voucher.

Moreover, the voucher database associates each identification code with a usability code equal to at least one and, in particular, to the number of uses. Alternatively, the loading step may be performed by a voucher issuing company, which directly loads the identification codes and other voucher-related data to the voucher database.

When the loading step is complete, the certification process may comprise a data submission step in which the server searches the voucher database for the identification codes and, thus, the vouchers associated with a personal code. When the vouchers associated with a personal code have been found, the voucher database creates and stores a personal voucher comprising an identification code; a discount obtained by adding the discounts of the previously identified vouchers; and a usability code. Lastly, the voucher database sends the information about the personal voucher to the personal unit, which creates a graphic element comprising said information.

The data relating to said personal voucher are thus stored in the personal unit.

It is important to note that the graphic element relating to the personal voucher is practically identical to that of any other voucher. It thus comprises print, such as for example, an alphanumeric code, a 1 D or 2D (QR) barcode or hologram or other similar element that can be read by said data extraction program. Preferably, the graphic element created by the database comprises a hologram.

Alternatively, the creation of the personal voucher and of the respective graphic element described above may be performed by the personal unit, grouping together the vouchers stored in the personal database.

This completes the data submission step.

When it comes to paying, the certification process comprises a reading step in which the certifier reads at least one identification code and sends the identification code read to the voucher database, via data link; and an authorization step in which the voucher database, after receiving the identification code, identifies the usability code associated therewith and sends the usability code to the certifier, via connector.

In the reading step, the reader records the graphic element of a voucher.

Alternatively, the reader records the graphic element displayed on the display means of the personal unit.

Using the data extraction program, the certifier obtains the identification code and, optionally, the discount contained in the graphic element read.

The certifier connects to the voucher database and sends it at least the identification code read.

As a further alternative, the personal unit sends the personal code to the certifier which then sends it to the voucher database.

It should be noted that, if the voucher database receives a personal code, it can search the database for the identification codes associated with the personal code and, thus, the respective usability codes and, appropriately, the respective discounts.

It can also block the identification code to prevent the simultaneous use of a same voucher if, for example, two certifiers submit the same identification code.

At this point the reading step ends and the authorization step starts, in which the voucher database identifies the usability code associated with the identification code received in the reading step and sends it to the certifier, preferably together with the respective discounts.

Optionally, the voucher database sends the expiry data associated with the various identification codes.

At this point, if the usability code is zero, the certifier classifies the voucher as not usable and does not apply the discount associated with it.

If the usability code is equal to or more than one, the certifier classifies the voucher as usable and applies a discount given by the result of the discount associated with the identification code multiplied by the usability code or preferably a number selected via interface and not greater than the usability code. It is important to note that the certifier, when appropriately controlled via interface, can apply a reduction in expenditure equal to a fraction of the discount associated with the identification code.

Moreover, the certifier can compare the expiry date sent by the voucher database with the timer to establish whether or not the voucher is still valid.

At the end of the authorization step, the certification process may comprise a step of counting the vouchers read and approved in the authorization step.

In this step, the vouchers taken database, which appropriately resides in the memory of the certifier, records the value of the voucher used for the purchase and, in particular, the identification code and discount associated with the identification code of the voucher, the usability of which has been approved and confirmed.

The vouchers taken database completes the counting step by storing the approved vouchers in the memory of the certifier.

At the end of the authorization step and, if envisaged, of the counting step, the certification process may comprise a step of updating the voucher database.

In this step the certifier uses the data link to send the identification codes of the used vouchers and the number of times each voucher has been used to the voucher database. Optionally, the certifier may use the data link to send the ID of the certifier to the voucher database.

Upon receiving these data, the voucher database updates the usability code by subtracting the number of uses and releases the identification code so that, if the new usability code is greater than zero, the voucher can be used again. Alternatively, in the updating step, the certifier sends the identification codes of the used vouchers, the respective fractions of discount and, in some cases, said ID to the voucher database which reduces the discount associated with each identification code by such fraction.

If the voucher database also receives the ID of the certifier, it can associate the ID of the certifier and the number of uses of each voucher with each identification code, so that, for example, the voucher issuer can know at which certifier and, thus, which establishment one or more vouchers have been used.

Optionally, in the updating step, the certifier may send the aforesaid information to the personal unit which updates its personal database in the same way as the voucher database.

The invention achieves some important advantages.

A first important advantage lies in the fact that the vouchers can be recorded in a voucher database which makes it practically impossible for vouchers to be forged and so for people to benefit from services/discounts to which they are not entitled. Further, storing the vouchers in a single voucher database makes it possible to prevent users from using vouchers that have already been used.

This aspect is further enhanced by the fact that the voucher database is updated almost instantaneously and by the fact that the simultaneous use of a same voucher is impossible.

Thus, one advantage is that the certification process and device eliminate the risk of fraud so that commercial establishments can accept vouchers with absolute peace of mind.

An important advantage lies in the fact that the reduced risk of fraud may result in more commercial establishments accepting vouchers, so that their use would increase. Another advantage consists of the fact that, by increasing the number of establishments that accept vouchers, the holders of such vouchers will more easily find shops willing to accept them.

Another advantage lies in the possibility of creating a personal database on a personal unit, with the vouchers available for each user.

Indeed, the possibility for people to have a personal voucher database on their own unit makes it easy for them to check how many vouchers they have left and, for example, whether or not they are about to expire.

Another advantage, by no means less important, for the owner of the certifier, is that a plurality of vouchers can easily be taken together, even only remotely, since their validity has already been verified by said certifier.

The presence of the vouchers taken database in the memory of the certifier means the owner of the commercial establishment can go to the voucher issuing company which, in turn, can check which vouchers have actually been taken by said owner by consulting said vouchers taken database.

A further advantage given by the presence of the vouchers taken database consists in the fact that the owner of the commercial activity can use this database for accounting or legal and similar purposes.

The latter two advantages are also obtained thanks to the ID of the certifier which, if stored in the voucher database, allows the used vouchers to be associated with the various certifier owners and, thus, the individual commercial establishments. Modifications and variations may be made to the invention described herein without departing from the scope of the inventive concept as expressed in the independent and dependent claims. All details may be replaced with equivalent elements and the scope of the invention includes all other materials, shapes and dimensions.

## Claims

1. A voucher certification device, said voucher comprising an identification code; said certification device **being characterized in that it comprises**
- a voucher database associating each said identification code with a usability code;
- a certifier comprising a reader of said identification code and suitable to be data linked to said voucher database in order to transmit said identification code read by said reader to said voucher database and receive said usability code associated with said identification code from said voucher database;
- a vouchers taken database, suitable to store information about vouchers taken.

2. The certification device as claimed in claim 1 wherein said voucher comprises a graphic element comprising said identification code and wherein said reader of said certifier is an optical reader.

3. The certification device as claimed in the preceding claim, wherein said graphic element is a hologram and wherein said reader comprises a hologram reading apparatus.

4. The certification device as claimed in one or more of the preceding claims, wherein said certifier comprises a memory and wherein said voucher database is stored in said memory.

5. The certification device as claimed in one or more of claims 1-3, comprising a server on which said voucher database resides; and wherein said certifier comprises a connector suitable to create a wireless data link between said server and said certifier.

6. The certification device as claimed in one or more of the preceding claims, wherein said certifier comprises a marker suitable to make a graphic mark on said voucher.

7. The certification device as claimed in one or more of the preceding claims, wherein said certifier comprises a movement device suitable to define an axis of translation of said voucher in relation to at least said reader.

8. The certification device as claimed in the preceding claim, wherein said movement device comprises an automatic feeder suitable to allow a plurality of said vouchers to be arranged on the certifier and to move them one by one along said axis of translation.

9. The certification device as claimed in one or more of claims 7-8, wherein said reader and said marker are substantially aligned along said axis of translation; and wherein said movement device is suitable to move said voucher so as to present at least one graphic element on each voucher to both said reader and to said marker.

10. The certification device as claimed in one or more of the preceding claims, wherein said voucher is a luncheon voucher.

11. A voucher certification process, said voucher comprising an identification code; said certification process being **characterized in that** it is suitable to be implemented by means of:
- a voucher database associating each said identification code with a usability code; and
- at least one certifier comprising a reader of said identification code and suitable to be data linked to said voucher database;
- **and in that** it comprises
- a reading step in which said at least one certifier reads said identification code and sends said read identification code via said data link to said voucher database;
- an authorization step in which said voucher database, having received said identification code, identifies said usability code and sends said usability code via said data link to said certifier; and
- a counting step in which the vouchers taken are stored in a vouchers taken database residing in said at least one certifier, to be collected by the voucher issuing company or used for accounting purposes.
